# EUROPÄISCHE PATENTSCHRIFT

(11) **EP 3 443 540 B1**
(45) Veröffentlichungstag und Bekanntmachung des Hinweises auf die Patenterteilung: **11.09.2024**
(21) Anmeldenummer: 17721062.2
(22) Anmeldetag: 13.04.2017
(51) Int. Cl.: G07C 9/00, G06Q 10/083, G06Q 10/0833

(54) **SYSTEM UND VERFAHREN ZUR ZUTRITTSREGELUNG ZU EINEM GESICHERTEN BEREICH ZUR ABLIEFERUNG VON PAKETSENDUNGEN**
SYSTEM AND METHOD FOR CONTROLLING ACCESS TO A SECURED AREA FOR THE DELIVERY OF PARCEL SHIPMENTS
SYSTÈME ET PROCÉDÉ DE CONTRÔLE DE L'ACCÈS À UNE ZONE SÉCURISÉE POUR LA LIVRAISON DE COLIS

(30) Priorität: 15.04.2016 DE 102016107020
(43) Veröffentlichungstag der Anmeldung: 20.02.2019
(73) Patentinhaber: uniberry GmbH, 22769 Hamburg (DE)
(72) Erfinder: WULF, Julian, 20259 Hamburg (DE); UECKERMANN, Felix, 20537 Hamburg (DE)
(74) Vertreter: Hauck Patentanwaltspartnerschaft mbB
(86) Internationale Anmeldenummer: PCT/EP2017/059004
(87) Internationale Veröffentlichungsnummer: WO 2017/178622

(56) Entgegenhaltungen:
- EP-A2- 2 075 769
- DE-A1- 102014 105 247
- US-A1- 2002 156 645
- US-A1- 2003 231 112
- US-A1- 2015 120 529
- US-A1- 2015 186 840

## Beschreibung

Die Erfindung betrifft ein System und ein Verfahren zur Zutrittsregelung zu einem gesicherten Bereich zur Ablieferung von Paketsendungen.

Bei der Auslieferung von Paketsendungen scheitert eine Zustellung durch den Paketboten häufig an der Abwesenheit des Empfängers. Die Paketsendung muss daraufhin von dem zustellenden Paketboten beispielsweise bei einer Postfiliale, einem Paketshop oder bei einem Nachbarn abgeliefert werden. Der Empfänger muss die für ihn bestimmte Sendung an den genannten Orten abholen, wobei er von den Öffnungszeiten der Filialen bzw. der Anwesenheit des Nachbarn abhängig ist. Alternativ kann eine Lieferung beispielsweise an zentrale Packstationen erfolgen. Nachteilig ist hieran jedoch ebenso, dass die Sendung vom Empfänger abgeholt werden muss. Bekannt sind zudem Paketbriefkästen für Ein- und Mehrfamilienhäuser. Paketbriefkästen für Mehrfamilienhäuser sind üblicherweise innerhalb des Gebäudes installiert. Um eine Paketsendung abzuliefern, muss der zustellende Paketbote also zum einen Zutritt zu dem Gebäude erlangen und zum anderen den Zugriff auf die Paketbriefkästen haben. Mancherorts haben zwar die Postboten einen Haustürschlüssel, die Paketboten allerdings nicht. Zudem ist es insbesondere in Großstädten impraktikabel für jedes Haus im Zustellungsbereich einen Schlüssel mitzuführen. Somit sind bei Abwesenheit des Empfängers ein Zutritt zum Gebäude und ein Zugriff auf einen Paketbriefkasten kaum möglich.

Ein System zur Zutrittsregelung ist zum Beispiel aus DE 10 2012 205 379 A1 bekannt. Hier wird eine an der Haustür installierte Türkamera zur Aufnahme eines Bildes verwendet. Dieses Bild wird anhand vorher definierter Muster ausgewertet und mit in einer Datenbank gespeicherten Mustern abgeglichen. Abhängig vom Ergebnis der Auswertung wird die Tür geöffnet. Über diese Mustererkennung kann beispielsweise das Gesicht einer Zutritt suchenden Person erkannt werden. Nachteilig ist hierbei, dass für jeden Paketboten, der Zutritt zu dem Gebäude erhalten soll, entsprechende Musterinformationen aufgenommen und für die spätere Auswertung in der Datenbank abgelegt werden müssen. Außerdem ist einer derartige Erkennung sehr fehleranfällig, da abhängig von dem Gesichtsausdruck der Person oder abhängig von den Lichtverhältnissen der Zutritt zum Gebäude verweigert werden könnte. Weiterhin ist es nicht wünschenswert, allen Paketboten jederzeit Zutritt zu dem Gebäude zu gewähren. Weiterhin kann beispielsweise über die Kamera ein auf einem mobilen Endgerät angezeigter Identifizierungscode ausgewertet werden. Hierfür muss der Zutrittsuchende zum einem jedoch jederzeit ein entsprechendes Gerät mit sich führen und zum anderen zum Empfang der Identifizierungscodes eingerichtet sein.

Aus DE 10 246 650 A1 ist ein Verfahren zum Deponieren von Paketen in einer Schließfachanlage bekannt. Es ist vorgesehen, dass ein Paketbote sich persönlich an der Schließfachanlage ausweist, beispielsweise mittels einer PIN oder einer Identifikationskarte. Der Paketbote muss stets ein Handgerät mit sich führen, um die Sendungsnummer zu scannen und aus der Sendungsnummer sowie aus Datum und Uhrzeit eine Abholnummer zu generieren, mit welcher der Empfänger die Schließfachanlage öffnen kann. Die Abholnummer muss an den Empfänger übermittelt werden. In nachteiliger Weise muss auch bei diesem Verfahren jeder Paketbote vor Nutzung des Systems persönlich registriert werden. Außerdem muss der Paketbote stets das Handgerät mit sich führen.

Aus EP 2 075 769 A2 ist ein Verfahren und System zur sicheren Zustellung eines Pakets bekannt geworden. Um Zutritt zu dem gesicherten Bereich zu erhalten, muss der Paketbote über ein Nummernfeld eines elektronischen Schlosses die Sendungsnummer des zuzustellenden Pakets eingeben. Das elektronische Schloss vergleicht die eingegebene Sendungsnummer mit einer zuvor von dem Zustellunternehmen empfangenen Sendungsnummer und öffnet, wenn die Sendungsnummern übereinstimmen. Nach einem vorgegebenen Zeitraum wird das elektronische Schloss wieder verriegelt. Die Sendungsnummern müssen zuvor als Öffnungscode aktiviert werden. Entweder muss der Empfänger diese händisch in das elektronische Schloss einspeichern oder das elektronische Schloss muss zum Empfang von E-Mails der Zustellunternehmen eingerichtet werden, aus denen es dann Sendungsinformationen ausliest. Das Auslesen geschieht über im elektronischen Schloss abzuspeichernde lieferantenspezifische Templates. Zudem wird anhand eines weiteren Templates über die Sendungsnummer die webbasierte Sendungsverfolgung des jeweiligen Zustellunternehmens aufgerufen und der Sendungsstatus abgefragt. Das elektronische Schloss fragt bei den Zulieferern stündlich oder täglich den Sendungsstatus der Sendungen ab, für die das elektronische Schloss eine E-Mail mit Sendungsnummer empfangen hat. Es ist von Nachteil, dass das System dazu eingerichtet werden muss, den Empfang von E-Mails der Zulieferunternehmen zu gewährleisten. Weiterhin ist die Erkennung der Sendungsnummer sowie des Sendungsstatus über in dem System gespeicherte Templates sehr fehleranfällig. Falls beispielsweise ein Zulieferunternehmen die Struktur der E-Mails oder der Website ändert, funktioniert das Template nicht mehr. Dies macht eine ständige Aktualisierung der Templates auf allen Systemen notwendig. Zudem ist es möglich, dass das System eine vom Paketboten eingegebene Sendungsnummer nicht akzeptiert, weil der Sendungsstatus nicht aktuell ist, da das System am Tag der Zulieferung diesen noch nicht abgefragt haben könnte.

US 2015/0120529 A1 beschreibt ein Zugangsverfahren zu einem gesicherten Bereich zur Ablieferung von Sendungen, wobei nach dem Scannen einer Sendungsnummer an einer Empfängerstation eine Freigabe durch den Empfänger aus der Ferne erfolgt.

EP 2 075 769 A2 betrifft ein System bzw. Verfahren zur Zustellung eines Pakets, wobei einem Paketboten Zutritt zu dem gesicherten Bereich gewährt wird, wenn eine durch den Paketboten über ein Nummernfeld eines elektronischen Schlosses des Systems eingegebene Sendungsnummer als Zugangscode aktiviert wurde. Der Zugangscode kann nach einer erfolgten Zustellung deaktiviert werden.

Der Erfindung liegt die Aufgabe zugrunde, ein System und ein Verfahren zur Zutrittsregelung zu einem gesicherten Bereich zur Ablieferung von Paketsendungen zur Verfügung zu stellen, welche die Ablieferung von Paketsendungen auch bei Abwesenheit des Empfängers ermöglichen und dabei besonders einfach und sicher sind. Insbesondere sollen die genannten Nachteile vermieden werden.

Die Erfindung löst die Aufgabe durch ein System nach Anspruch 1 sowie durch ein Verfahren nach Anspruch 11.

Die Erfindung betrifft ein System zur Zutrittsregelung zu einem gesicherten Bereich zur Ablieferung von Paketsendungen,
- umfassend eine Zugangsvorrichtung,
- eine mit der Zugangsvorrichtung verbundene zentrale Servereinheit und
- mindestens eine mit der zentralen Servereinheit verbundene Datenbank,
- wobei die Zugangsvorrichtung eine Leseeinheit zur Erkennung einer Sendungsnummer einer abzugebenden Paketsendung und eine Sendeeinheit zur Übermittlung der erkannten Sendungsnummer gemeinsam mit einer die Zugangsvorrichtung kennzeichnenden Identifikationsnummer an die zentrale Servereinheit aufweist,
- wobei die zentrale Servereinheit zum Abgleich der Sendungsnummer mit der mindestens einen Datenbank ausgebildet ist, um zumindest den Empfängernamen und den Sendungsstatus abzufragen und
- die zentrale Servereinheit zum Abgleich der Identifikationsnummer mit der mindestens einen Datenbank ausgebildet ist, um Registrierungsinformationen abzufragen und
- die zentrale Servereinheit weiterhin zum Abgleich des Empfängernamens mit den Registrierungsinformationen ausgebildet ist, um zu ermitteln, ob der Sendungsempfänger am Standort der Zugangsvorrichtung eine Empfangsadresse registriert hat, und
- die zentrale Servereinheit zur Übermittlung eines Freigabesignals an die Zugangsvorrichtung ausgebildet ist, wobei die zentrale Servereinheit das Freigabesignal an die Zugangsvorrichtung übermittelt, wenn die Sendung in Zustellung ist und der Sendungsempfänger am Standort der Zugangsvorrichtung eine Empfangsadresse registriert hat und
- die Zugangsvorrichtung eine Empfangseinheit zum Empfang des Freigabesignals und eine Steuereinheit zur Ansteuerung eines Türöffners in Reaktion auf das Freigabesignal aufweist.

Die Erfindung betrifft weiterhin ein Verfahren zur Zutrittsregelung zu einem gesicherten Bereich zur Ablieferung von Paketsendungen, umfassend die Schritte
- Erkennen einer Sendungsnummer einer zuzustellenden Paketsendung durch eine am Zustellungsort befindliche Zugangsvorrichtung,
- Übermittlung der erkannten Sendungsnummer sowie einer die Zugangsvorrichtung kennzeichnenden Identifikationsnummer durch die Zugangsvorrichtung an eine zentrale Servereinheit,
- Abfrage von Empfängername und Sendungsstatus durch Übermittlung der Sendungsnummer von der zentralen Servereinheit an mindestens eine Datenbank,
- Abfrage von Registrierungsinformationen durch Übermittlung der Identifikationsnummer von der zentralen Servereinheit an mindestens eine Datenbank,
- Abgleich des über die Sendungsnummer abgefragten Empfängernamens mit den Registrierungsinformationen durch die zentrale Servereinheit, um zu ermitteln, ob der Sendungsempfänger am Standort der Zugangsvorrichtung eine Empfangsadresse registriert hat,
- Übermittlung eines Freigabesignals von der zentralen Servereinheit an die Zugangsvorrichtung, wenn die Sendung in Zustellung ist und der Sendungsempfänger am Standort der Zugangsvorrichtung eine Empfangsadresse registriert hat und
- Ansteuern eines Türöffners durch die Zugangsvorrichtung in Reaktion auf das Freigabesignal.

Nach dem erfindungsgemäßen System sowie dem erfindungsgemäßen Verfahren wird die Sendungsnummer einer zuzustellenden Paketsendung durch eine Zugangsvorrichtung erkannt und gemeinsam mit einer Identifikationsnummer der Zugangsvorrichtung an eine zentrale Servereinheit übermittelt. Diese übermittelt die Sendungsnummer an mindestens eine Datenbank, um so den Empfängernamen und den Sendungsstatus abzufragen. Weiterhin wird die Identifikationsnummer der Zugangsvorrichtung von der zentralen Servereinheit an die mindestens eine Datenbank übermittelt, um Registrierungsinformationen abzufragen. Der Empfängername wird mit den Registrierungsinformationen abgeglichen, um zu ermitteln, ob der Sendungsempfänger am Standort der Zugangsvorrichtung eine Empfangsadresse registriert hat. Abhängig von diesem Abgleich wird ein Freigabesignal von der zentralen Servereinheit erzeugt und an die Zugangsvorrichtung übermittelt, welche daraufhin den Türöffner ansteuert, um die Tür eines Gebäudes oder eines Paketdepots zu öffnen. Nur wenn die Sendung als "in Zustellung" markiert ist und der Empfänger der Sendung an dem Zustellort auch als Empfänger registriert ist wird die Tür geöffnet. Sämtliche Kommunikation zwischen der zentralen Servereinheit und der Zugangsvorrichtung kann beispielsweise über das Internet erfolgen. Das erfindungsgemäße System ist zur Ausführung des erfindungsgemäßen Verfahrens geeignet. Die folgenden Erläuterungen beziehen sich sowohl auf das erfindungsgemäße Verfahren wie auch das erfindungsgemäße System.

Erfindungsgemäß umfasst das System eine Zugangsvorrichtung, eine zentrale Servereinheit, die mit der Zugangsvorrichtung verbunden ist sowie mindestens eine Datenbank, welche mit der zentralen Servereinheit verbunden ist. Die Zugangsvorrichtung kann beispielsweise an oder neben der Haustür eines Mehrfamilienhauses angebracht sein, um Zutritt zu dem Gebäude zu ermöglichen. Auch kann die Zugangsvorrichtung an einem Paketdepot innerhalb eines Gebäudes angebracht sein, um Zugriff auf das Paketdepot zu gewähren. Erfindungsgemäß umfasst die Zugangsvorrichtung zumindest eine Leseeinheit, eine Sendeinheit, eine Empfangseinheit sowie eine Steuereinheit zur Ansteuerung eines Türöffners.

Die Leseeinheit der Zugangsvorrichtung ist dazu ausgebildet, die Sendungsnummer einer Paketsendung zu erkennen. Hierzu kann ein Paketbote die Sendungsnummer beispielsweise manuell an die Leseeinheit übermitteln, beispielsweise durch Eingabe der Nummer über ein Eingabefeld. Bevorzugt kann die Leseeinheit automatisch eine Sendungsnummer eines zuzustellenden Pakets erkennen. Nach einer bevorzugten Ausgestaltung umfasst die Leseeinheit der Zugangsvorrichtung einen Scanner, der eine auf der zuzustellenden Sendung angebrachte Sendungsnummer auslesen kann. Folglich kann das Scannen der Sendungsnummer der zuzustellenden Paketsendung durch die einen Scanner umfassende Leseeinheit der Zugangsvorrichtung erfolgen. Die Sendungsnummer kann beispielsweise als Barcode oder als QR-Code auf der Sendung angebracht sein. Der Scanner kann dementsprechend ein Barcodescanner sein.

Die Sendeeinheit der Zugangsvorrichtung ist dazu ausgebildet, die durch die Leseeinheit der Zugangsvorrichtung erkannte Sendungsnummer einer zuzustellenden Paketsendung an die zentrale Servereinheit zu übermitteln. Hierzu kann die Zugangsvorrichtung mit der zentralen Servereinheit über die Sendeeinheit beispielsweise über ein mobiles Datennetzwerk wie UMTS, LTE oder eine andere Funkverbindung verbunden sein. Auch kann die Verbindung zwischen Zugangsvorrichtung und zentraler Servereinheit über ein lokales Netzwerk beispielsweise über Kabel per LAN oder über eine WLAN-Verbindung kabellos erfolgen. Bevorzugt umfasst die Zugangsvorrichtung eine kombinierte Sende- und Empfangseinheit zur kabellosen, bidirektionalen Verbindung mit der zentralen Servereinheit. Die Kommunikation zwischen der zentralen Servereinheit und der Sendeeinheit, insbesondere der Sende- und Empfangseinheit, der Zugangsvorrichtung kann beispielsweise über das Internet erfolgen. Erfindungsgemäß ist die Leseeinheit der Zugangsvorrichtung zudem dazu ausgebildet, eine die Zugangsvorrichtung kennzeichnende Identifikationsnummer an die zentrale Servereinheit zu übermitteln. Diese Identifikationsnummer ist spezifisch für jede Zugangsvorrichtung und ermöglicht der zentralen Servereinheit die Zuordnung der Zugangsvorrichtung zu einem Standort, beispielsweise einer Adresse.

Die zentrale Servereinheit gleicht sowohl die Sendungsnummer als auch die Identifikationsnummer der Zugangsvorrichtung mit in der mindestens einen Datenbank gespeicherten Informationen ab. Durch diesen Abgleich ermittelt die zentrale Servereinheit zum einen über die Sendungsnummer den Empfängernamen und den Sendungsstatus der zuzustellenden Sendung und zum anderen über die Identifikationsnummer Registrierungsinformationen. In der mindestens einen Datenbank können also unter anderem der Empfängername und der Sendungsstatus sowie weitere Registrierungsinformationen gespeichert sein. Auch können mehrere Datenbanken vorgesehen sein, wobei die genannten Daten in unterschiedlichen Datenbanken gespeichert sein können. Die Sendungsinformationen wie Empfängername und Sendungsstatus können dabei direkt von den Zulieferern an die zentrale Servereinheit übermittelt werden. Auch kann die zentrale Servereinheit Zugriff auf die Sendungsinformationen der Zulieferer haben. Die zentrale Servereinheit kann dabei beispielsweise direkt auf eine oder mehrere Datenbanken der Zulieferer zugreifen. Auch kann die zentrale Servereinheit zum indirekten Zugriff auf die Daten einer oder mehrerer Datenbanken der Zulieferer zugreifen, beispielsweise über zwischengeschaltete Server oder Computersysteme der Zulieferer.

Die zentrale Servereinheit ist weiterhin dazu ausgebildet, den über die Sendungsnummer ermittelten Empfängernamen mit den über die Identifikationsnummer ermittelten Registrierungsinformationen abzugleichen. Hierbei wird ermittelt, ob der Sendungsempfänger am Standort der Zugangsvorrichtung eine Empfangsadresse registriert hat. Wenn der Sendungsempfänger am Standort der Zugangsvorrichtung eine Empfangsadresse registriert hat und zudem der ermittelte Sendungsstatus die Sendung als in Zustellung gekennzeichnet, erzeugt die zentrale Servereinheit ein Freigabesignal und übermittelt dieses an die Zugangsvorrichtung. Die Empfangseinheit der Zugangsvorrichtung empfängt das Freigabesignal und die Steuereinheit der Zugangsvorrichtung steuert daraufhin einen Türöffner an, den Zutritt zu dem gesicherten Bereich zu gewähren. Eine Voraussetzung zur Gewährung des Zutritts ist also die Prüfung, ob der Sendungsempfänger überhaupt an dem geplanten Zustellort eine Zustelladresse registriert hat. Somit kann verhindert werden, dass mit einer Sendungsnummer jede beliebige Zugangsvorrichtung des erfindungsgemäßen Systems zur Ansteuerung des Türöffners bewegt werden kann. Eine weitere Voraussetzung ist die Prüfung, ob die Sendung in Zustellung ist. Nur, wenn der Zusteller die Sendung als beispielsweise "in Zustellung" markiert hat, wird das Freigabesignal erzeugt und somit Zutritt zu dem gesicherten Bereich gewährt. Eine Sendungsnummer fungiert somit nur so lange als Zugangscode zu dem gesicherten Bereich, solange die Sendung in Zustellung ist. Dies dient insbesondere der Vermeidung von Mehrfachzustellungen. Außerdem könnte sich der Paketbote oder eine Dritte Person ansonsten jederzeit über eine alte Sendungsnummer Zutritt verschaffen.

Erfindungsgemäß kann die Zugangsvorrichtung über ihre Sendeeinheit an die zentrale Servereinheit ein Sendungsstatussignal übermitteln, woraufhin die zentrale Servereinheit den in der mindestens einen Datenbank gespeicherten Sendungsstatus als "zugestellt" markiert. Dies kann beispielsweise nach Ablauf einer definierten Zeitdauer nach Empfang des Freigabesignals durch die Empfangseinheit der Zugangsvorrichtung erfolgen. Erfindungsgemäß erfolgt dies nach erfolgreicher Ansteuerung des Türöffners durch die Zugangsvorrichtung oder nach dem erneuten Schließen einer durch den Türöffner angesteuerten Tür.

Nach einer bevorzugten Ausgestaltung umfasst das System eine Haustür und/oder die Tür eines Paketdepots, welche durch den Türöffner der Zugangsvorrichtung in Reaktion auf das Freigabesignal geöffnet wird. Das System kann also sowohl den Zutritt zu einem Gebäude sowie den Zugriff auf ein Paketdepot ermöglichen.

Nach einer weiteren Ausgestaltung ist die zentrale Servereinheit zur Übermittlung eines Fehlersignals an die Zugangsvorrichtung ausgebildet, wobei die zentrale Servereinheit das Fehlersignal an die Zugangsvorrichtung übermittelt, wenn die Sendung nicht als "in Zustellung" gekennzeichnet ist und/oder der Sendungsempfänger am Standort der Zugangsvorrichtung keine Empfangsadresse registriert hat. Die Zugangsvorrichtung kann hierbei eine Empfangseinheit zum Empfang des Fehlersignals und eine Anzeigeeinrichtung aufweisen, wobei die Anzeigeeinrichtung bei Empfang des Fehlersignals eine Fehlermeldung ausgibt. Hierdurch kann dem die Sendung ausliefernden Paketboten eine Fehlermeldung ausgegeben werden, falls die Sendungsnummer des Pakets nicht zum Zutritt berechtigen sollte. Die Anzeigeeinrichtung der Zugangsvorrichtung kann beispielsweise ein Display oder ein Leuchtmittel wie eine LED sein. Auch kann die zentrale Servereinheit dazu ausgebildet sein, jede erzeugte Fehlermeldung in der mindestens einen Datenbank abzuspeichern. Somit kann überwacht werden, an welchen Zugangsvorrichtungen zu welcher Zeit und mit welcher Sendungsnummer ein unberechtigter Zutrittsversuch unternommen wurde.

Nach einer bevorzugten Ausgestaltung umfassen die Registrierungsinformationen den Namen des am Standort der Zugangsvorrichtung registrierten Empfängers, insbesondere die Namen aller am Standort der Zugangsvorrichtung registrierten Empfänger. Diese Registrierungsinformationen können nach einer bevorzugten Ausgestaltung dadurch erzeugt werden, indem Personen, die das erfindungsgemäße System nutzen möchten, sich vor der erstmaligen Nutzung des Systems unter Angabe zumindest ihres Namens und mindestens einer Empfangsadresse registrieren. Diese Registrierung kann beispielsweise online über ein Internetportal erfolgen, welches mit der zentralen Servereinheit verbunden ist. Die zentrale Servereinheit kann die Registrierungsinformationen in der mindestens einen Datenbank als Nutzerdaten speichern. Durch die Registrierung kann der Empfänger einer spezifischen Zugangsvorrichtung zugeordnet werden. Dieser Zugangsvorrichtung können somit insbesondere alle an der entsprechenden Adresse registrierten Empfänger zugeordnet sein. Auch kann ein Empfänger mehreren Zugangsvorrichtungen zugeordnet sein. Somit kann ein Empfänger das erfindungsgemäße System an mehreren Empfangsadressen nutzen. Durch eine Übermittlung der erkannten Sendungsnummer von der zentralen Servereinheit an die mindestens eine Datenbank können die Registrierungsinformationen abgefragt werden.

Nach einer weiteren Ausgestaltung umfassen die Registrierungsinformationen zudem eine Lieferautorisierung für mindestens einen Zulieferer. Die zentrale Servereinheit kann dann zum Abgleich des Empfängernamens mit der Lieferautorisierung ausgebildet sein, wobei die zentrale Servereinheit das Freigabesignal nur dann an die Zugangsvorrichtung übermittelt, wenn der jeweilige Zulieferer vom Empfänger autorisiert wurde. Ein Empfänger kann beispielsweise bei seiner erstmaligen Registrierung für das erfindungsgemäße System beispielsweise über ein Internetportal einen oder mehrere Zulieferer autorisieren. Die Autorisierung kann als Teil der Registrierungsinformationen in der mindestens einen Datenbank gespeichert werden. Bevorzugt sind grundsätzlich alle Zulieferer autorisiert und der Empfänger kann einzelnen Zulieferern die Lieferautorisierung entziehen und diese somit sperren. Auch kann der registrierte Empfänger später, beispielsweise über das zur Registrierung verwendete Internetportal, weitere Zulieferer autorisieren oder sperren. Somit kann ein Empfänger einen oder mehrere Zulieferer sperren, falls er diesen den Zutritt zu dem gesicherten Bereich, insbesondere dem Haus oder dem Paketdepot nicht gewähren möchte. Bevorzugt können die Autorisierungsinformationen in der mindestens einen Datenbank gespeichert werden.

Bevorzugt umfasst das System mindestens eine Zuliefererdatenbank und mindestens eine Empfängerdatenbank, wobei die zentrale Servereinheit zum Abgleich der Sendungsnummer mit der mindestens einen Zuliefererdatenbank ausgebildet ist, um zumindest den Empfängernamen und den Sendungsstatus abzufragen und die zentrale Servereinheit zum Abgleich der Identifikationsnummer mit der mindestens einen Empfängerdatenbank ausgebildet ist, um Registrierungsinformationen abzufragen. Die zentrale Servereinheit kann also in bevorzugter Weise auf die Datenbanken unterschiedlichster Zulieferer zugreifen. Es ist somit möglich über die erkannte Sendungsnummer direkt über die Datenbanken der Zulieferer in zuverlässiger Weise weitere Empfängerinformationen wie den Empfängernamen und den Sendungsstatus abzufragen. Weiterhin kann nach einer bevorzugten Ausgestaltung das System mindestens einen Zuliefererserver umfassen, wobei die zentrale Servereinheit über den mindestens einen Zuliefererserver mit der mindestens einen Zuliefererdatenbank in Verbindung tritt, um zumindest den Empfängernamen und den Sendungsstatus abzufragen. So kann eine Abfrage von Empfängername und Sendungsstatus durch Übermittlung der Sendungsnummer von der zentralen Servereinheit an mindestens eine Zuliefererdatenbank über mindestens einen Zuliefererserver erfolgen. Sollte die zentrale Servereinheit keinen direkten Zugriff auf die Datenbanken der Zulieferer haben, so kann also eine Abfrage über die Server bzw. Computersysteme der jeweiligen Zulieferer erfolgen. Unabhängig von den Zulieferdatenbanken können in der Empfängerdatenbank die Registrierungsinformationen gespeichert sein.

Besonders bevorzugt ist die zentrale Servereinheit dazu ausgebildet, die übermittelte Sendungsnummer einem Zulieferer zuzuordnen und den Abgleich der Sendungsnummer mit der mindestens einen Zuliefererdatenbank auszuführen, falls die Zuordnung erfolgreich war und den Abgleich der Sendungsnummer mit allen Zuliefererdatenbanken auszuführen, falls die Zuordnung nicht erfolgreich war. Die zentrale Servereinheit kann beispielsweise anhand der Struktur der erkannten Sendungsnummern diese bestimmten Zulieferern zuordnen und somit gezielt die Sendungsnummern an deren Server übermitteln bzw. einen Abgleich mit der entsprechenden Zuliefererdatenbank durchführen. Sollte die zentrale Servereinheit die Struktur der Sendungsnummer nicht erkennen oder keinem Zulieferer zuordnen können, so kann die erkannte Sendungsnummer mit allen Zuliefererdatenbanken abgeglichen werden. Auch wenn die Sendungsnummern mehrerer Zulieferer die gleiche Struktur aufweisen sollten, kann die erkannte Sendungsnummer entsprechend an diese Zulieferer übermittelt und mit deren Daten abgeglichen werden.

Nach einer weiteren Ausgestaltung ist die Zugangsvorrichtung zur Vorprüfung der Struktur der erkannten Sendungsnummer ausgebildet, um festzustellen, ob es sich um eine Sendungsnummer handelt. Die Zugangsvorrichtung kann somit erkennen, ob es sich bei einer Nummer offensichtlich nicht um eine Sendungsnummer handelt und beispielsweise über eine Anzeigeeinrichtung der Zugangsvorrichtung eine Fehlermeldung ausgeben. Sollte das System einen Barcode-Scanner umfassen, so könnte zum Beispiel versucht werden den Barcode eines Getränkebehälters zu scannen. Die Zugangsvorrichtung erkennt in diesem Fall, dass es sich offensichtlich nicht um eine Sendungsnummer handelt. Beispielsweise könnte die Zugangsvorrichtung dazu ausgebildet sein, nur erfasste Nummern mit einer definierten Anzahl an Stellen, beispielsweise Nummern mit vier oder mehr Stellen, an die zentrale Servereinheit weiterzuleiten. Somit wird die zentrale Servereinheit vor einer Vielzahl an unnötigen Anfragen bewahrt.

Durch das erfindungsgemäße System sowie das erfindungsgemäße Verfahren ist sichergestellt, dass ein Paketbote jederzeit eine zuzustellende Sendung ausliefern kann. Ein erneuter Zustellversuch ist nicht nötig. Auch muss die Sendung nicht länger bei einer Postfiliale oder einem Paketshop abgeholt werden. Unabhängig von der Anwesenheit des Empfängers kann auf einfache und effiziente Weise und zu jeder Tageszeit eine erfolgreiche Zustellung stattfinden. Zudem ist es nicht nötig, jedem Paketboten einen Schlüssel oder anderweitige Zugangsmittel zu verschaffen. Der Zutritt wird grundsätzlich unabhängig von der zustellenden Person geregelt. Eine Zutrittsregelung erfolgt ausschließlich auf Grundlage der auf der Sendung befindlichen Sendungsnummer. Folglich muss der Paketbote keine weiteren Geräte mit sich führen. Weiterhin ist der Zutritt zu dem gesicherten Bereich nur unter strengen Bedingungen möglich, denn Zutritt wird nur erteilt, wenn die Sendung für jemanden in dem betreffenden Gebäude bestimmt ist und wenn die Sendung auch in der Datenbank als in Zustellung markiert ist. Es kann sich somit weder der Paketbote noch ein Dritter Zugang zu dem Gebäude verschaffen, wenn die Sendung nicht als "in Zustellung" markiert ist. Auch wenn die Sendung als "in Zustellung" markiert ist, kann mittels der Sendungsnummer nur der Zutritt zu dem Gebäude erlangt werden, in dem der Sendungsempfänger registriert ist. Dem erfindungsgemäßen System sowie dem erfindungsgemäßen Verfahren liegt grundsätzlich ein Pull-Prinzip zugrunde: Die Zugangsvorrichtung wird erst aktiv, wenn sie eine Sendungsnummer erkennt. Dies ist zum einen besonders effizient. Zum anderen ist somit sichergestellt, dass der ermittelte Sendungsstatus stets aktuell ist. Zudem ist keine Verwendung von Templates notwendig, um Sendungsinformationen wie den Sendungsstatus zu ermitteln. Die Sendungsinformationen werden von den Zulieferern zur Verfügung gestellt oder direkt von deren Datenbanken ausgelesen.

Im Folgenden wird das erfindungsgemäße System bzw. das erfindungsgemäße Verfahren anhand von einem Ausführungsbeispiel erläutert. Es zeigen:
- Fig. 1: Das erfindungsgemäße System in einer schematischen Darstellung.
- Fig. 2: Die Zugangsvorrichtung des erfindungsgemäßen Systems in einer schematischen Darstellung.
- Fig. 3: Ein Flussdiagramm des erfindungsgemäßen Verfahrens.
- Fig. 4: Eine Detailansicht des Schritts der Prüfung der Zutrittsberechtigung des Flussdiagramms aus Figur 3.

Im Folgenden bezeichnen gleiche Bezugszeichen gleiche Gegenstände.

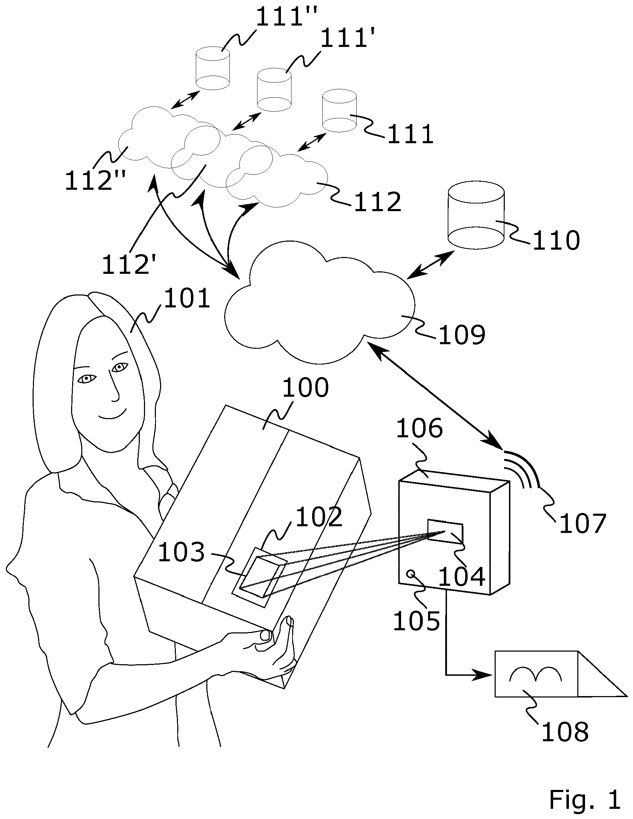

Figur 1 zeigt eine Ausgestaltung des erfindungsgemäßen Systems bzw. des erfindungsgemäßen Verfahrens. Es ist ein Paketbote 101 mit einer Sendung 100 und einem auf der Sendung angeordneten Etikett 102 zu erkennen. Das Etikett 102 umfasst eine Sendungsnummer. Mit 103 ist ein Erfassungsbereich eines Barcodescanners 104 einer Zugangsvorrichtung 106 bezeichnet. Die Zugangsvorrichtung 106 umfasst weiterhin eine Anzeigeeinrichtung 105. Die Zugangsvorrichtung 106 steht mit einem Türöffner 108 und über eine drahtlose Verbindung 107 mit einer zentralen Servereinheit 109 in Verbindung. Die zentrale Servereinheit 109 steht wiederum mit einer Empfängerdatenbank 110 und über Zuliefererserver 112, 112', 112" mit Zulieferdatenbanken 111, 111', 111" in Verbindung.

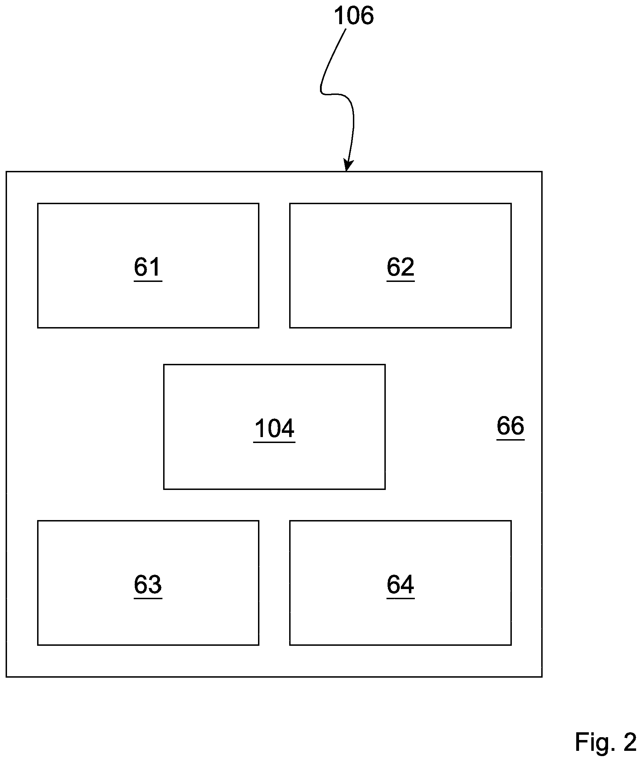

Figur 2 zeigt schematisch den Aufbau der Zugangsvorrichtung 106. Auf einer Platine 66 sind eine Prozessoreinheit 61, eine Sende- und Empfangseinheit 62, eine Spannungsversorgung 63, eine Scaneinheit 104 sowie eine Aktorsteuerung 64 zur Ansteuerung des Türöffners 108 angeordnet.

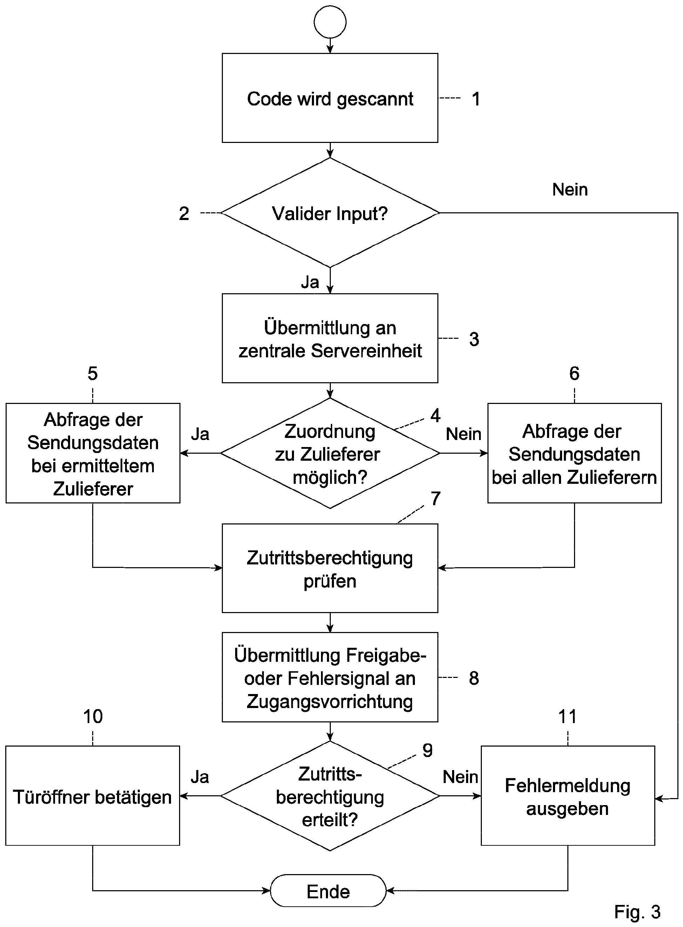

Im Folgenden wird die Funktionsweise des Systems bzw. des Verfahrens anhand aller Figuren erläutert. Zur Zustellung einer Paketsendung 100 hält ein Paketbote 101 das Etikett 102 mit der Sendungsnummer in den Erfassungsbereich 103 der Leseeinheit 104 der Zugangsvorrichtung 106. Die Leseeinheit 104 der Zugangsvorrichtung 106 liest die Sendungsnummer aus. Es kann sich bei der Leseeinheit 104 insbesondere um einen Barcodescanner handeln, der eine als Barcode vorliegende Sendungsnummer erfasst. Dieser Vorgang ist in dem Flussdiagramm der Figur 3 als Schritt 1 gekennzeichnet ("Code wird gescannt").

Anschließend kann die Zugangsvorrichtung 106 über ihre Prozessoreinheit 61 eine Vorprüfung der erkannten Sendungsnummer vornehmen. So können erfasste Nummern, welche offensichtlich keine Sendungsnummern sind, aussortiert werden. Beispielsweise können Nummern mit weniger als vier Stellen grundsätzlich aussortiert werden, da diese üblicherweise keine Sendungsnummern darstellen. Der Schritt der Vorprüfung der Sendungsnummer ist in Figur 3 mit der Bezugsziffer 2 gekennzeichnet ("Valider Input?"). Sollte die erfasste Nummer offensichtlich keine Sendungsnummer sein, der Input also nicht valide sein, so wird durch die Zugangsvorrichtung 106 eine Fehlermeldung ausgegeben, siehe Schritt 11 der Figur 3. Die Ausgabe der Fehlermeldung erfolgt über die Anzeigeeinrichtung 105, welche beispielsweise ein Display oder ein Leuchtmittel umfassen kann. Das Leuchtmittel kann zur Darstellung der Fehlermeldung beispielsweise rot leuchten.

Erkannte Sendungsnummern werden von der Zugangsvorrichtung 106 über eine drahtlose Verbindung 107, beispielsweise ein mobiles Datennetzwerk, an die zentrale Servereinheit 109 übermittelt. Zudem übermittelt die Zugangsvorrichtung 106 eine Identifikationsnummer der Zugangsvorrichtung an die zentrale Servereinheit 109. Die Übermittlung der erkannten Sendungsnummer sowie der Identifikationsnummer ist in Figur 3 als Schritt 3 gekennzeichnet ("Übermittlung an zentrale Servereinheit").

Die zentrale Servereinheit 109, insbesondere eine nicht dargestellte Prozessoreinheit der zentralen Servereinheit 109, ordnet daraufhin die empfangene Sendungsnummer einem möglichen Zulieferer zu. Diese Zuordnung kann auf Grundlage struktureller Muster der Sendungsnummer erfolgen, welche üblicherweise bei allen Zulieferern unterschiedlich sind. Sollte die Zuordnung zu einem bestimmten Zulieferer erfolgreich sein, so wird die Sendungsnummer von der zentralen Servereinheit 109 zur Abfrage von Sendungsdaten an den entsprechenden Zulieferer übermittelt, siehe Schritt 5 der Figur 3 ("Abfrage von Sendungsdaten bei ermitteltem Zulieferer"). Falls die Zuordnung zu einem spezifischen Zulieferer nicht erfolgreich sein sollte, so wird die Sendungsnummer an alle mit der zentralen Servereinheit 109 verbundenen Zulieferer übermittelt, siehe Schritt 6 der Figur 3 ("Abfrage der Sendungsdaten bei allen Zulieferern"). Sollte die zentrale Servereinheit 109 direkten Zugriff auf die Zuliefererdatenbanken 111, 111', 111" haben, so kann ein direkter Abgleich der Sendungsnummer mit den besagten Zuliefererdatenbanken 111, 111', 111" erfolgen. So werden über die von der Zugangsvorrichtung erkannte Sendungsnummer der Empfängername und der Sendungsstatus ermittelt. Sollte die zentrale Servereinheit 109 keinen direkten Zugriff auf die Zuliefererdatenbanken 111, 111 `, 111" haben, so kann eine Abfrage über die Server/Computersysteme 112, 112', 112" der Zulieferer erfolgen. In diesem Fall können also die Server/Computersysteme 112, 112', 112" der Zulieferer auf die Zuliefererdatenbanken 111, 111', 111" zugreifen, um den Empfängernamen und den Sendungsstatus der erkannten Sendungsnummer abzurufen und an die zentrale Servereinheit 109 zu übermitteln. Als Ergebnis der Abfrage erhält die zentrale Servereinheit somit zumindest den Namen des Empfängers, für den die Sendung 100 bestimmt ist sowie den Sendungsstatus.

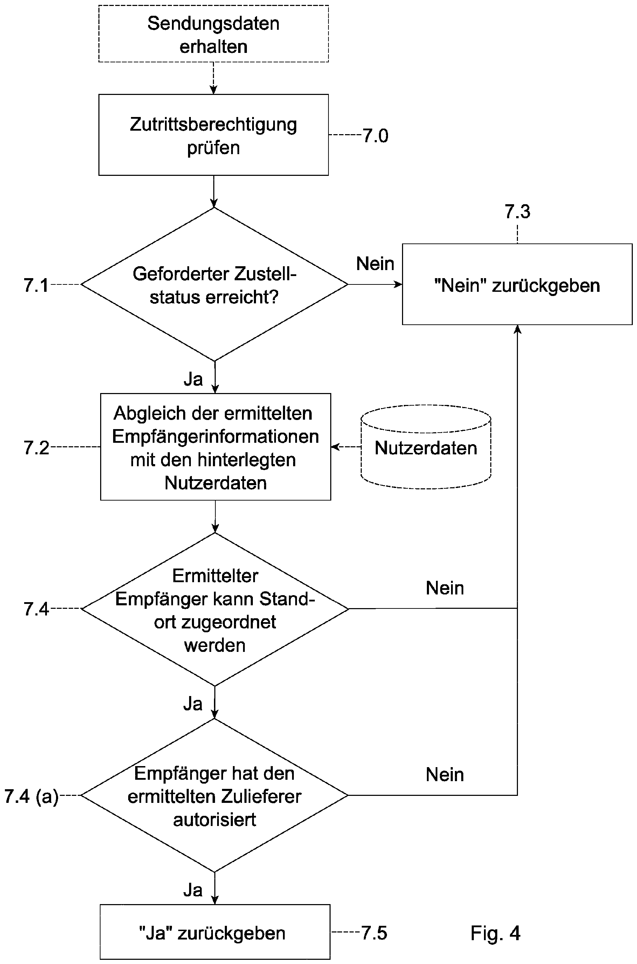

Mit den vorliegenden Informationen, also insbesondere dem über die Sendungsnummer ermittelten Empfängernamen, dem Sendungsstatus sowie der Identifikationsnummer der Zugangsvorrichtung 106, wird anschließend die Zutrittsberechtigung überprüft. Dies entspricht dem Schritt 7 der Figur 3 ("Zutrittsberechtigung prüfen"), welcher in Figur 4 im Detail dargestellt ist.

Anhand des ermittelten Sendungsstatus prüft die zentrale Servereinheit 109, ob ein geforderter Zustellstatus erreicht ist, Schritt 7.1 der Figur 4 ("Geforderter Zustellstatus erreicht"). Der geforderte Status kann beispielsweise sein, dass die Sendung durch den Zusteller als "in Zustellung" definiert wurde. Ist der geforderte Zustellstatus nicht erreicht, so wird ein "Nein" zurückgegeben, Schritt 7.3 der Figur 4. Ist der geforderte Zustellstatus erreicht, so folgt der nächste Schritt der Prüfung der Zugangsberechtigung. Die Erreichung des geforderten Zustellstatus ist die erste notwendige Bedingung zur Gewährung des Zutritts zu dem gesicherten Bereich, also dem Gebäude oder dem Paketdepot. Somit kann sichergestellt werden, dass eine Sendungsnummer nur in einem gewissen Zeitraum Zutritt zu dem gesicherten Bereich gewährt.

Es folgt ein "Abgleich der ermittelten Empfängerinformationen mit den hinterlegten Nutzerdaten", Schritt 7.2 der Figur 4. Es werden hierbei die in Schritt 5 ermittelten Sendungsdaten, insbesondere der so ermittelte Empfängername, mit in einer Empfängerdatenbank 110 hinterlegten Nutzerdaten abgeglichen. In der Empfängerdatenbank 110 sind als Nutzerdaten Registrierungsinformationen gespeichert, wobei die Registrierungsinformationen insbesondere die Namen der registrierten Nutzer des Systems sowie eine oder mehrere Empfangsadressen der registrierten Nutzer enthalten. Eine Person, welche das erfindungsgemäße System bzw. Verfahren nutzen möchte, kann zuvor im Rahmen einer Registrierung an dem System diese Registrierungsinformationen bereitstellen. Beispielsweise kann dafür ein mit der zentralen Servereinheit 109 verbundenes Onlineportal vorgesehen sein. Die zentrale Servereinheit 109 kann die über das Onlineportal eingegebenen Nutzerdaten als Registrierungsinformationen in die Empfängerdatenbank 110 übertragen. Durch den Abgleich der über die Zulieferer ermittelten Empfängerinformationen mit der Empfängerdatenbank 110 kann die zentrale Servereinheit 109 also die Namen der registrierten Empfänger und deren hinterlegte Empfangsadressen abrufen. Zudem können in der Empfängerdatenbank oder in einer beliebigen anderen Datenbank die Identifikationsnummern der Zugangsvorrichtungen 106 mit den Adressen der Standorte der Zugangsvorrichtungen 106 verknüpft sein. Die zentrale Servereinheit 109 prüft somit, ob der für die Sendung bestimmte Empfänger am Standort der Zugangsvorrichtung 106 eine Empfangsadresse hinterlegt hat, Schritt 7.4 der Figur 4 ("Ermittelter Empfänger kann Standort zugeordnet werden"). Sollte die Zuweisung des Sendungsempfängers zu dem Standort der Zugangsvorrichtung nicht erfolgreich sein, so wird wiederum ein "Nein" ausgegeben. Sollte die Zuweisung des ermittelten Sendungsempfängers zu dem Standort der Zugangsvorrichtung erfolgreich sein, sollte also der geplante Sendungsempfänger am Standort der Zugangsvorrichtung 106 eine Empfangsadresse registriert haben, so wird ein "Ja" zurückgegeben und die Prüfung der Zutrittsberechtigung ist abgeschlossen, Schritt 7.5 der Figur 4. Die erfolgreiche Zuordnung des Empfängers zu dem Standort der Zugangsvorrichtung ist also die zweite notwendige Bedingung zur Gewährung des Zutritts zu dem gesicherten Bereich, also dem Gebäude oder dem Paketdepot. Somit kann sichergestellt werden, dass eine Sendungsnummer nicht zu jedem gesicherten Bereich Zutritt gewährt, welcher eine Zugangsvorrichtung aufweist, die Teil des erfindungsgemäßen Systems ist.

Weiterhin kann optional der Prüfungsschritt 7.4 (a) ("Empfänger hat den ermittelten Zulieferer autorisiert") vorgesehen sein. Hierbei umfassen die Registrierungsinformationen auch die durch den jeweiligen Sendungsempfänger zugelassenen Zulieferer. Eine Zutrittsberechtigung wird nur erteilt, wenn der geplante Sendungsempfänger den Zulieferer der Sendung autorisiert hat. Somit kann bestimmten Zulieferern grundsätzlich der Zugang zu dem gesicherten Bereich verwehrt werden.

Abhängig vom Ergebnis der Prüfung der Zutrittsberechtigung in Schritt 7 erzeugt die zentrale Servereinheit 109 ein Freigabesignal oder ein Fehlersignal und übermittelt das entsprechende Signal an die Zugangsvorrichtung 106, Schritt 8 in Figur 3 ("Übermittlung Freigabe- oder Fehlersignal an Zugangsvorrichtung"). Wird bei der vorhergehenden Prüfung der Zutrittsberechtigung durch die zentrale Servereinheit ein "Ja" ausgegeben, so erzeugt die zentrale Servereinheit das Freigabesignal. Wird bei der vorhergehenden Prüfung der Zutrittsberechtigung durch die zentrale Servereinheit ein "Nein" ausgegeben, so erzeugt die zentrale Servereinheit das Fehlersignal. Die Zugangsvorrichtung 106 steuert auf dem Empfang des Freigabesignals hin über die Aktorsteuerung 64 den Türöffner 108 an, um die Tür zu dem gesicherten Bereich zu öffnen. Zudem kann beispielsweise ein Leuchtmittel der Anzeigeeinrichtung grün leuchten. In Reaktion auf den Empfang des Fehlersignals gibt die Zugangsvorrichtung 106 über die Anzeigeeinrichtung 105 eine Fehlermeldung aus. Dies entspricht den Schritten 9 bis 11 der Figur 3.

## Patentansprüche

1. System zur Zutrittsregelung zu einem gesicherten Bereich zur Ablieferung von Paketsendungen,
• umfassend eine Zugangsvorrichtung (106),
• eine mit der Zugangsvorrichtung verbundene zentrale Servereinheit (109) und
• mindestens eine mit der zentralen Servereinheit (109) verbundene Datenbank (110),
• wobei die Zugangsvorrichtung (106) eine Leseeinheit (104) zur Erkennung einer Sendungsnummer einer abzugebenden Paketsendung (100) und eine Sendeeinheit (62) zur Übermittlung der erkannten Sendungsnummer gemeinsam mit einer die Zugangsvorrichtung (106) kennzeichnenden Identifikationsnummer an die zentrale Servereinheit (109) aufweist,
• wobei die zentrale Servereinheit (109) zum Abgleich der Sendungsnummer mit der mindestens einen Datenbank (110, 111, 111', 111") ausgebildet ist, um zumindest den Empfängernamen und den Sendungsstatus abzufragen und
• die zentrale Servereinheit (109) zum Abgleich der Identifikationsnummer mit der mindestens einen Datenbank (110) ausgebildet ist, um Registrierungsinformationen abzufragen und
• die zentrale Servereinheit (109) weiterhin zum Abgleich des Empfängernamens mit den Registrierungsinformationen ausgebildet ist, um zu ermitteln, ob der Sendungsempfänger am Standort der Zugangsvorrichtung (106) eine Empfangsadresse registriert hat, und
• die zentrale Servereinheit (109) zur Übermittlung eines Freigabesignals an die Zugangsvorrichtung (106) ausgebildet ist, wobei die zentrale Servereinheit (109) das Freigabesignal an die Zugangsvorrichtung (106) übermittelt, wenn die Sendung (100) den Sendungsstatus "in Zustellung" aufweist und der Sendungsempfänger am Standort der Zugangsvorrichtung eine Empfangsadresse registriert hat,
• die Zugangsvorrichtung (106) eine Empfangseinheit (62) zum Empfang des Freigabesignals und eine Steuereinheit (64) zur Ansteuerung eines Türöffners in Reaktion auf das Freigabesignal aufweist und
• die Zugangsvorrichtung dazu eingerichtet ist, nach erfolgreicher Ansteuerung des Türöffners durch die Zugangsvorrichtung oder nach dem erneuten Schließen einer durch den Türöffner angesteuerten Tür über ihre Sendeeinheit ein Sendungsstatussignal an die zentrale Servereinheit zu übermitteln, woraufhin die zentrale Servereinheit den in der mindestens einen Datenbank gespeicherten Sendungsstatus als "zugestellt" markiert.

2. System nach Anspruch 1, **dadurch gekennzeichnet, dass** die Leseeinheit (104) der Zugangsvorrichtung (106) einen Scanner zum Erkennen der Sendungsnummer umfasst.

3. System nach Anspruch 1 oder 2, **dadurch gekennzeichnet, dass** das System eine Haustür und/oder die Tür eines Paketdepots umfasst, welche durch den Türöffner in Reaktion auf das Freigabesignal geöffnet wird.

4. System nach einem der vorhergehenden Ansprüche, **dadurch gekennzeichnet, dass** die zentrale Servereinheit (109) zur Übermittlung eines Fehlersignals an die Zugangsvorrichtung (106) ausgebildet ist, wobei die zentrale Servereinheit (109) das Fehlersignal an die Zugangsvorrichtung (106) übermittelt, wenn die Sendung (100) nicht in Zustellung ist und/oder der Sendungsempfänger am Standort der Zugangsvorrichtung (106) keine Empfangsadresse registriert hat und die Zugangsvorrichtung (106) eine Empfangseinheit (62) zum Empfang des Fehlersignals und eine Anzeigeeinrichtung (105) aufweist, wobei die Anzeigeeinrichtung (105) bei Empfang des Fehlersignals eine Fehlermeldung ausgibt.

5. System nach einem der vorhergehenden Ansprüche, **dadurch gekennzeichnet, dass** die Registrierungsinformationen den Namen des am Standort der Zugangsvorrichtung (106) registrierten Empfängers, insbesondere die Namen aller am Standort der Zugangsvorrichtung (106) registrierten Empfänger, umfassen.

6. System nach einem der vorhergehenden Ansprüche, **dadurch gekennzeichnet, dass** die Registrierungsinformationen eine Lieferautorisierung für mindestens einen Zulieferer umfasst und die zentrale Servereinheit (109) weiterhin zum Abgleich des Empfängernamens mit der Lieferautorisierung ausgebildet ist, wobei die zentrale Servereinheit (109) das Freigabesignal nur dann an die Zugangsvorrichtung (106) übermittelt, wenn der jeweilige Zulieferer vom Empfänger autorisiert wurde.

7. System nach einem der vorhergehenden Ansprüche, **dadurch gekennzeichnet, dass** das System mindestens eine Zuliefererdatenbank (111) und mindestens eine Empfängerdatenbank (110) umfasst, wobei die zentrale Servereinheit (109) zum Abgleich der Sendungsnummer mit der mindestens einen Zuliefererdatenbank (111) ausgebildet ist, um zumindest den Empfängernamen und den Sendungsstatus abzufragen und die zentrale Servereinheit (109) zum Abgleich der Identifikationsnummer mit der mindestens einen Empfängerdatenbank (110) ausgebildet ist, um Registrierungsinformationen abzufragen.

8. System nach Anspruch 7, **dadurch gekennzeichnet, dass** das System weiterhin mindestens einen Zuliefererserver (112) umfasst, wobei die zentrale Servereinheit (109) über den mindestens einen Zuliefererserver (112) mit der mindestens einen Zuliefererdatenbank (111) in Verbindung tritt, um zumindest den Empfängernamen und den Sendungsstatus abzufragen.

9. System nach Anspruch 7 oder 8, **dadurch gekennzeichnet, dass** die zentrale Servereinheit (109) dazu ausgebildet ist, die übermittelte Sendungsnummer einem Zulieferer zuzuordnen und den Abgleich der Sendungsnummer mit der mindestens einen Zuliefererdatenbank (111) auszuführen, falls die Zuordnung erfolgreich war und den Abgleich der Sendungsnummer mit allen Zuliefererdatenbanken (111, 111`, 111") auszuführen, falls die Zuordnung nicht erfolgreich war.

10. System nach einem der vorhergehenden Ansprüche, **dadurch gekennzeichnet, dass** die Zugangsvorrichtung (106) zur Vorprüfung der Struktur der erkannten Sendungsnummer ausgebildet ist, um festzustellen, ob es sich um eine Sendungsnummer handelt.

11. Verfahren zur Zutrittsregelung zu einem gesicherten Bereich zur Ablieferung von Paketsendungen, umfassend die Schritte
• Erkennen einer Sendungsnummer einer zuzustellenden Paketsendung durch eine am Zustellungsort befindliche Zugangsvorrichtung (106),
• Übermittlung der erkannten Sendungsnummer sowie einer die Zugangsvorrichtung (106) kennzeichnenden Identifikationsnummer durch die Zugangsvorrichtung (106) an eine zentrale Servereinheit (109),
• Abfrage von Empfängername und Sendungsstatus durch Übermittlung der Sendungsnummer von der zentralen Servereinheit (109) an mindestens eine Datenbank (110, 111, 11 1', 111 "),
• Abfrage von Registrierungsinformationen durch Übermittlung der Identifikationsnummer von der zentralen Servereinheit an mindestens eine Datenbank (110),
• Abgleich des Empfängernamens mit den Registrierungsinformationen durch die zentrale Servereinheit (109), um zu ermitteln, ob der Sendungsempfänger am Standort der Zugangsvorrichtung (106) eine Empfangsadresse registriert hat,
• Übermittlung eines Freigabesignals von der zentralen Servereinheit (109) an die Zugangsvorrichtung (106), wenn die Sendung (100) den Sendungsstatus "in Zustellung" aufweist und der Sendungsempfänger am Standort der Zugangsvorrichtung (106) eine Empfangsadresse registriert hat,
• Ansteuern eines Türöffners durch die Zugangsvorrichtung (106) in Reaktion auf das Freigabesignal und
• Übermitteln eines Sendungsstatussignals durch die Zugangsvorrichtung über ihre Sendeeinheit an die zentrale Servereinheit nach erfolgreicher Ansteuerung des Türöffners durch die Zugangsvorrichtung oder nach dem erneuten Schließen einer durch den Türöffner angesteuerten Tür, woraufhin die zentrale Servereinheit den in der mindestens einen Datenbank gespeicherten Sendungsstatus als "zugestellt" markiert.

12. Verfahren nach Anspruch 11, umfassend das Scannen der Sendungsnummer der zuzustellenden Paketsendung (100) durch eine einen Scanner umfassende Leseeinheit (104) der Zugangsvorrichtung (106).

13. Verfahren nach Anspruch 11 oder 12, **gekennzeichnet durch** den Schritt der Übermittlung eines Fehlersignals von der zentralen Servereinheit (109) an die Zugangsvorrichtung (106), falls die Sendung (100) nicht in Zustellung ist und/oder der Sendungsempfänger am Standort der Zugangsvorrichtung keine Empfangsadresse registriert hat und den Schritt der Anzeige einer Fehlermeldung durch eine Anzeigeeinrichtung (105) der Zugangsvorrichtung (106), wenn die Zugangsvorrichtung (106) das Fehlersignal empfängt.

14. Verfahren nach einem der Ansprüche 11 bis 13, weiterhin umfassend den Schritt der Registrierung eines Empfängers zur Speicherung von Registrierungsinformationen in der mindestens einen Datenbank (110), wobei die Abfrage von Registrierungsinformationen durch Übermittlung der Identifikationsnummer von der zentralen Servereinheit (109) an die mindestens eine Datenbank (110) erfolgt.

15. Verfahren nach Anspruch 14, weiterhin umfassend den Schritt der Autorisierung mindestens eines Zulieferers durch den Empfänger und das Speichern der Autorisierung als Teil der Registrierungsinformation in der mindestens einen Datenbank (110), wobei die Übermittlung eines Freigabesignals von der zentralen Servereinheit (109) an die Zugangsvorrichtung (106) nur dann erfolgt, wenn der jeweilige Zulieferer durch den Empfänger autorisiert wurde.

16. Verfahren nach einem der Ansprüche 11 bis 15, **dadurch gekennzeichnet, dass** die Abfrage von Empfängername und Sendungsstatus durch Übermittlung der Sendungsnummer von der zentralen Servereinheit (109) an mindestens eine Zuliefererdatenbank (111) erfolgt und dass die Abfrage von Registrierungsinformationen durch Übermittlung der Identifikationsnummer von der zentralen Servereinheit (109) an mindestens eine Empfängerdatenbank (110) erfolgt.

17. Verfahren nach Anspruch 16, **dadurch gekennzeichnet**, die Abfrage von Empfängername und Sendungsstatus durch Übermittlung der Sendungsnummer von der zentralen Servereinheit (109) an mindestens eine Zuliefererdatenbank (111) über mindestens einen Zuliefererserver (112) erfolgt.

18. Verfahren nach Anspruch 16 oder 17, weiterhin umfassend den Schritt der Zuordnung der übermittelten Sendungsnummer zu einem Zulieferer durch die zentrale Servereinheit (109) anhand der Struktur der Sendungsnummer, wobei die Abfrage von Empfängername und Sendungsstatus durch Übermittlung der Sendungsnummer von der zentralen Servereinheit (109) an die Zuliefererdatenbank (111) des zugeordneten Zulieferers erfolgt, falls die Zuordnung erfolgreich war und die Abfrage von Empfängername und Sendungsstatus durch Übermittlung der Sendungsnummer von der zentralen Servereinheit (109) an die Zuliefererdatenbanken (111, 111', 111") aller Zulieferer erfolgt, falls die Zuordnung nicht erfolgreich war.

19. Verfahren nach einem der Ansprüche 11 bis 18, weiterhin umfassend den Schritt der Vorprüfung der Struktur der erkannten Sendungsnummer durch die Zugangsvorrichtung (106), um festzustellen, ob es sich um eine Sendungsnummer handelt.

## Claims

1. A system for access control to a secure area for delivery of parcel shipments, comprising:
• an access device (106),
• a central server unit (109) connected to the access device and
• at least one database (110) connected to the central server unit (109),
• wherein the access device (106) includes a reading unit (104) for detecting a shipment number of a parcel to be delivered (100) and a transmitting unit (62) for sending the detected shipment number together with an identification number unique to the access device (106) to the central server unit (109),
• wherein the central server unit (109) is configured to compare the shipment number with the at least one database (110, 111, 111', 111") to at least query the recipient's name and the shipment status, and
• wherein the central server unit (109) is also configured to compare the identification number with the at least one database (110) to query registration information, and
• wherein the central server unit (109) further compares the recipient's name with the registration information to determine whether the recipient of the shipment has a registered delivery address at the location of the access device (106), and
• wherein the central server unit (109) is configured to transmit a release signal to the access device (106), which sends the release signal to the access device (106) when the parcel (100) has a shipment status of "in delivery" and the parcel recipient has a registered delivery address at the location of the access device,
• wherein the access device (106) includes a receiving unit (62) for receiving the release signal and a control unit (64) for activating a door opener in response to the release signal, and
• wherein the access device is configured to, after successful activation of the door opener by the access device or upon re-closing of a door activated by the door opener, transmit a shipment status signal via its transmitting unit to the central server unit, whereupon the central server unit marks the shipment status as "delivered" in the at least one database.

2. The system of claim 1, **characterized in that** the reading unit (104) of the access device (106) includes a scanner for detecting the shipment number.

3. The system according to claim 1 or 2, **characterized in that** the system includes a house door and/or the door of a parcel depot, which is opened by the door opener in response to the release signal.

4. The system according to any of the preceding claims, **characterized in that** the central server unit (109) is configured to transmit an error signal to the access device (106), wherein the central server unit (109) transmits the error signal to the access device (106) if the shipment (100) is not in delivery and/or the parcel recipient at the location of the access device (106) has not registered a delivery address, and the access device (106) includes a receiving unit (62) for receiving the error signal and a feedback device (105) which issues an error message upon receipt of the error signal.

5. The system according to any of the preceding claims, **characterized in that** the registration information includes the name of the recipient registered at the location of the access device (106), in particular the names of all recipients registered at the location of the access device (106).

6. The system according to any of the preceding claims, **characterized in that** the registration information includes a delivery authorization for at least one delivery service provider, and the central server unit (109) is further configured to compare the recipient's name with the delivery authorization, wherein the central server unit (109) only transmits the release signal to the access device (106) if the respective delivery service provider has been authorized by the recipient.

7. The system according to any of the preceding claims, **characterized in that** the system includes at least one delivery service provider database (111) and at least one recipient database (110), wherein the central server unit (109) is configured to compare the shipment number with the at least one delivery service provider database (111) to at least query the recipient's name and the shipment status, and the central server unit (109) is configured to compare the identification number with the at least one recipient database (110) to query registration information.

8. The system according to claim 7, **characterized in that** the system further includes at least one delivery service provider server (112), wherein the central server unit (109) communicates with the at least one delivery service provider database (111) via the at least one delivery service provider server (112) to at least query the recipient's name and the shipment status.

9. The system according to claim 7 or 8, **characterized in that** the central server unit (109) is configured to match the transmitted shipment number to a delivery service provider and to perform the comparison of the shipment number with the at least one delivery service provider database (111) if the assignment is successful, and to perform the comparison of the shipment number with all delivery service provider databases (111, 111', 111") if the assignment is not successful.

10. The system according to any of the preceding claims, **characterized in that** the access device (106) is configured to preliminarily check the structure of the detected shipment number to determine whether it constitutes a shipment number.

11. A method for access control to a secure area for delivery of parcel shipments, comprising the steps of:
• detecting a shipment number of a parcel to be delivered by an access device (106) located at the delivery location,
• transmitting the detected shipment number and an identification number identifying the access device (106) by the access device (106) to a central server unit (109),
• querying the recipient's name and shipment status by transmitting the shipment number from the central server unit (109) to at least one database (110, 111, 111', 111"),
• querying registration information by transmitting the identification number from the central server unit to at least one database (110),
• comparing the recipient's name with the registration information by the central server unit (109) to determine whether the parcel recipient at the location of the access device (106) has a registered delivery address,
• transmitting a release signal from the central server unit (109) to the access device (106) if the parcel (100) has a shipment status of "in delivery" and the parcel recipient at the location of the access device (106) has a registered delivery address,
• activating a door opener by the access device (106) in response to the release signal, and
• transmitting a shipment status signal by the access device via its transmitting unit to the central server unit after successful activation of the door opener by the access device or after re-closing a door activated by the door opener, whereupon the central server unit marks the shipment status as "delivered" in the at least one database.

12. The method according to claim 11, comprising scanning the shipment number of the parcel to be delivered (100) by a reading unit (104) of the access device (106) that includes a scanner.

13. The method according to claim 11 or 12, **characterized by** the step of transmitting an error signal from the central server unit (109) to the access device (106) if the parcel (100) is not in delivery and/or the parcel recipient at the location of the access device does not have a registered delivery address, and the step of displaying an error message by a display device (105) of the access device (106) when the access device (106) receives the error signal.

14. The method according to any of the claims 11 to 13, further comprising the step of registering a recipient to store registration information in the at least one database (110), wherein querying of registration information is performed by transmitting the identification number from the central server unit (109) to the at least one database (110).

15. The method according to claim 14, further comprising the step of authorizing at least one delivery service provider by the recipient and storing the authorization as part of the registration information in the at least one database (110), wherein the transmission of a release signal from the central server unit (109) to the access device (106) occurs only if the respective delivery service provider has been authorized by the recipient.

16. The method according to any of the claims 11 to 15, **characterized in that** the querying of the recipient's name and shipment status is performed by transmitting the shipment number from the central server unit (109) to at least one delivery service provider database (111), and that the querying of registration information is performed by transmitting the identification number from the central server unit (109) to at least one recipient database (110).

17. The method according to claim 16, **characterized in that** the querying of the recipient's name and shipment status is performed by transmitting the shipment number from the central server unit (109) to at least one delivery service provider database (111) via at least one delivery service provider server (112).

18. The method according to claim 16 or 17, further comprising the step of assigning the transmitted shipment number to a delivery service provider by the central server unit (109) based on the structure of the shipment number, wherein the querying of the recipient's name and shipment status is performed by transmitting the shipment number from the central server unit (109) to the delivery service provider database (111) of the assigned delivery service provider if the assignment is successful, and the querying of the recipient's name and shipment status is performed by transmitting the shipment number from the central server unit (109) to the delivery service provider databases (111, 111', 111") of all delivery service providers if the assignment is not successful.

19. The method according to any of the claims 11 to 18, further comprising the step of preliminarily checking the structure of the recognized shipment number by the access device (106) to determine whether it constitutes a shipment number.

## Revendications

1. Système de contrôle de l'accès à une zone sécurisée pour la livraison de colis,
• comportant un dispositif d'entrée (106),
• une unité de serveur centrale (109) reliée au dispositif d'entrée et
• au moins une base de données (110) reliée à l'unité de serveur centrale (109),
• dans lequel le dispositif d'entrée (106) présente une unité de lecture (104) pour la détection d'un numéro de suivi d'un colis (100) à déposer et une unité d'émission (62) pour la transmission du numéro de suivi reconnu conjointement avec un numéro d'identification caractérisant le dispositif d'entrée (106) à l'unité de serveur centrale (109),
• dans lequel l'unité de serveur centrale (109) est conçue pour comparer le numéro de suivi avec l'au moins une base de données (110, 111, 111', 111") afin d'obtenir au moins le nom du destinataire et le statut d'expédition et
• l'unité de serveur centrale (109) est conçue pour comparer le numéro d'identification avec l'au moins une base de données (110) afin d'obtenir des informations d'enregistrement et
• l'unité de serveur centrale (109) est en outre conçue pour comparer le nom du destinataire avec les informations d'enregistrement afin de déterminer si le destinataire du colis a enregistré une adresse de réception sur le site du dispositif d'entrée (106), et
• l'unité de serveur centrale (109) est conçue pour transmettre un signal de validation au dispositif d'entrée (106), dans lequel l'unité de serveur centrale (109) transmet le signal de validation au dispositif d'entrée (106) lorsque le colis (100) présente le statut d'expédition « en cours de livraison » et que le destinataire du colis a enregistré une adresse de réception sur le site du dispositif d'entrée,
• le dispositif d'entrée (106) présente une unité de réception (62) pour la réception du signal de validation et une unité de commande (64) pour l'actionnement d'un ouvre-porte en réaction au signal de validation et
• le dispositif d'entrée est configuré pour transmettre un signal de statut d'expédition par le biais de son unité d'émission à l'unité de serveur centrale après un actionnement réussi de l'ouvre-porte par le dispositif d'entrée ou après la nouvelle fermeture d'une porte actionnée par l'ouvre-porte, après quoi l'unité de serveur centrale marque le statut d'expédition enregistré dans l'au moins une base de données comme « livré ».

2. Système selon la revendication 1, **caractérisé en ce que** l'unité de lecture (104) du dispositif d'entrée (106) comporte un scanner pour la détection du numéro de suivi.

3. Système selon la revendication 1 ou 2, **caractérisé en ce que** le système comporte une porte d'immeuble et/ou la porte d'un dépôt de paquets, laquelle est ouverte par l'ouvre-porte en réaction au signal de validation.

4. Système selon l'une des revendications précédentes, **caractérisé en ce que** l'unité de serveur centrale (109) est conçue pour transmettre un signal d'erreur au dispositif d'entrée (106), dans lequel l'unité de serveur centrale (109) transmet le signal d'erreur au dispositif d'entrée (106) lorsque le colis (100) n'est pas en cours de livraison et/ou que le destinataire du colis n'a pas enregistré d'adresse de réception sur le site du dispositif d'entrée (106) et le dispositif d'entrée (106) présente une unité de réception (62) pour la réception du signal d'erreur et un dispositif d'affichage (105), dans lequel le dispositif d'affichage (105) émet un message d'erreur lors de la réception du signal d'erreur.

5. Système selon l'une des revendications précédentes, **caractérisé en ce que** les informations d'enregistrement comportent le nom du destinataire enregistré sur le site du dispositif d'entrée (106), en particulier les noms de tous les destinataires enregistrés sur le site du dispositif d'entrée (106).

6. Système selon l'une des revendications précédentes, **caractérisé en ce que** les informations d'enregistrement comportent une autorisation de livraison pour au moins un fournisseur et l'unité de serveur centrale (109) est en outre conçue pour comparer le nom du destinataire avec l'autorisation de livraison, dans lequel l'unité de serveur centrale (109) transmet le signal de validation au dispositif d'entrée (106) seulement si le fournisseur respectif a été autorisé par le destinataire.

7. Système selon l'une des revendications précédentes, **caractérisé en ce que** le système comporte au moins une base de données de fournisseurs (111) et au moins une base de données de destinataires (110), dans lequel l'unité de serveur centrale (109) est conçue pour comparer le numéro de suivi avec l'au moins une base de données de fournisseurs (111) afin d'obtenir au moins le nom du destinataire et le statut d'expédition et l'unité de serveur centrale (109) est conçue pour comparer le numéro d'identification avec l'au moins une base de données de destinataires (110) afin d'obtenir des informations d'enregistrement.

8. Système selon la revendication 7, **caractérisé en ce que** le système comporte en outre au moins un serveur de fournisseur (112), dans lequel l'unité de serveur centrale (109) se connecte à l'au moins une base de données de fournisseurs (111) par le biais de l'au moins un serveur de fournisseur (112), afin d'obtenir au moins le nom du destinataire et le statut d'expédition.

9. Système selon la revendication 7 ou 8, **caractérisé en ce que** l'unité de serveur centrale (109) est conçue pour attribuer le numéro de suivi transmis à un fournisseur et pour effectuer la comparaison du numéro de suivi avec l'au moins une base de données de fournisseurs (111) dans le cas où l'attribution a réussi et pour effectuer la comparaison du numéro de suivi avec toutes les bases de données de fournisseurs (111, 111', 111") dans le cas où l'attribution a échoué.

10. Système selon l'une des revendications précédentes, **caractérisé en ce que** le dispositif d'entrée (106) est conçu pour vérifier préalablement la structure du numéro de suivi détecté, afin de constater s'il s'agit d'un numéro de suivi.

11. Procédé de contrôle de l'accès à une zone sécurisée pour la livraison de colis, comportant les étapes suivantes
• détection d'un numéro de suivi d'un colis à livrer par un dispositif d'entrée (106) situé au lieu de livraison,
• transmission du numéro de suivi détecté ainsi que d'un numéro d'identification caractérisant le dispositif d'entrée (106) par le dispositif d'entrée (106) à une unité de serveur centrale (109),
• obtention du nom du destinataire et du statut d'expédition par transmission du numéro de suivi depuis l'unité de serveur centrale (109) à au moins une base de données (110, 111, 111', 111"),
• obtention d'informations d'enregistrement par transmission du numéro d'identification depuis l'unité de serveur centrale à au moins une base de données (110),
• comparaison du nom du destinataire avec les informations d'enregistrement par l'unité de serveur centrale (109) afin de déterminer si le destinataire du colis a enregistré une adresse de réception sur le site du dispositif d'entrée (106),
• transmission d'un signal de validation depuis l'unité de serveur centrale (109) au dispositif d'entrée (106) lorsque le colis (100) présente le statut d'expédition « en cours de livraison » et que le destinataire du colis a enregistré une adresse de réception sur le site du dispositif d'entrée (106),
• actionnement d'un ouvre-porte par le dispositif d'entrée (106) en réaction au signal de validation et
• transmission d'un signal de statut d'expédition par le dispositif d'entrée à l'unité de serveur centrale par le biais de son unité d'émission après un actionnement réussi de l'ouvre-porte par le dispositif d'entrée ou après la nouvelle fermeture d'une porte actionnée par l'ouvre-porte, après quoi l'unité de serveur centrale marque le statut d'expédition enregistré dans l'au moins une base de données comme « livré ».

12. Procédé selon la revendication 11, comportant le balayage du numéro de suivi du colis (100) à livrer par une unité de lecture (104) du dispositif d'entrée (106) comportant un scanner.

13. Procédé selon la revendication 11 ou 12, **caractérisé par** l'étape de transmission d'un signal d'erreur depuis l'unité de serveur centrale (109) au dispositif d'entrée (106) lorsque le colis (100) n'est pas en cours de livraison et/ou que le destinataire du colis n'a pas enregistré d'adresse de réception sur le site du dispositif d'entrée et par l'étape d'affichage d'un message d'erreur par le dispositif d' affichage (105) du dispositif d'entrée (106) lorsque le dispositif d'entrée (106) reçoit le signal d'erreur.

14. Procédé selon l'une des revendications 11 à 13, comportant également l'étape d'enregistrement d'un destinataire pour la sauvegarde d'informations d'enregistrement dans l'au moins une base de données (110), dans lequel l'obtention d'informations d'enregistrement est effectuée par transmission du numéro d'identification depuis l'unité de serveur centrale (109) à l'au moins une base de données (110).

15. Procédé selon la revendication 14, comportant également l'étape d'autorisation d'au moins un fournisseur par le destinataire et la sauvegarde de l'autorisation comme partie des informations d'enregistrement dans l'au moins une base de données (110), dans lequel la transmission d'un signal d'autorisation depuis l'unité de serveur centrale (109) au dispositif d'entrée (106) n'a lieu que si le fournisseur respectif a été autorisé par le destinataire.

16. Procédé selon l'une des revendications 11 à 15, **caractérisé en ce que** l'obtention du nom du destinataire et du statut d'expédition est effectuée par transmission du numéro de suivi depuis l'unité de serveur centrale (109) à au moins une base de données de fournisseurs (111) et **en ce que** l'obtention d'informations d'enregistrement est effectuée par transmission du numéro d'identification depuis l'unité de serveur centrale (109) à au moins une base de données de destinataires (110).

17. Procédé selon la revendication 16, **caractérisé en ce que** l'obtention du nom du destinataire et du statut d'expédition est effectuée par transmission du numéro de suivi depuis l'unité de serveur centrale (109) à au moins une base de données de fournisseurs (111) par le biais d'au moins un serveur de fournisseur (112).

18. Procédé selon la revendication 16 ou 17, comportant également l'étape d'attribution du numéro de suivi transmis à un fournisseur par l'unité de serveur centrale (109) à l'aide de la structure du numéro de suivi, dans lequel l'obtention du nom du destinataire et du statut d'expédition est effectuée par transmission du numéro de suivi depuis l'unité de serveur centrale (109) à la base de données de fournisseurs (111) du fournisseur attribué dans le cas où l'attribution a réussi et l'obtention du nom du destinataire et du statut d'expédition est effectuée par transmission du numéro de suivi depuis l'unité de serveur centrale (109) aux bases de données de fournisseurs (111, 111', 111") de tous les fournisseurs dans le cas où l'attribution a échoué.

19. Procédé selon l'une des revendications 11 à 18, comportant également l'étape de vérification préalable, par le dispositif d'entrée (106), de la structure du numéro de suivi détecté afin de constater s'il s'agit d'un numéro de suivi.
